# EUROPÄISCHE PATENTSCHRIFT

(11) **EP 1 370 778 B1**
(45) Veröffentlichungstag und Bekanntmachung des Hinweises auf die Patenterteilung: **04.01.2006**
(21) Anmeldenummer: 02727219.4
(22) Anmeldetag: 13.03.2002
(51) Int. Cl.: F16B 43/00, F16B 5/02

(54) **BEFESTIGUNGSVORRICHTUNG AN EINEM TRÄGERBLECH**
FIXING DEVICE ON A MOUNTING PLATE
DISPOSITIF DE FIXATION SUR UNE TOLE SUPPORT

(30) Priorität: 15.03.2001 DE 10112425
(43) Veröffentlichungstag der Anmeldung: 17.12.2003
(73) Patentinhaber: ROBERT BOSCH GMBH, 70442 Stuttgart (DE)
(72) Erfinder: SCHMICH, Franz, 72793 Pfullingen (DE)
(86) Internationale Anmeldenummer: PCT/DE2002/000881
(87) Internationale Veröffentlichungsnummer: WO 2002/075169

(56) Entgegenhaltungen:
- DE-A- 19 726 750

## Beschreibung

### Stand der Technik

Die Erfindung betrifft ein Trägerblech mit einer Befestigungsvorrichtung, insbesondere für eine Karosserie eines Kraftfahrzeugs.

Die Befestigungsvorrichtung weist ein auf einer Montageseite des Trägerblechs eingeschweißtes Halteteil in Form eines Gewindebolzens, einen über eine Teillänge des Halteteils steckbaren Distanzkörper in der Art einer Buchse und ein mit dem Halteteil korrespondierendes Spannelement in Form einer Mutter auf. Ferner ist in der Befestigungsvorrichtung noch das zu befestigende Bauteil eingebracht.

Befestigungsvorrichtungen der vorstehenden Art sind in vielfältigen Ausführungen bekannt. Dabei hat der Distanzkörper insbesondere den Zweck, die Anlagefläche für ein durch die Befestigungsvorrichtung zu befestigendes Bauteil, das beispielsweise ein Sensorgehäuse sein kann, von der möglicherweise geschwungenen Form des Trägerblechs, das sich beispielsweise nach ästhetischen Anforderungen einer Karosserie ausrichtet, zu entkoppeln.

Um Kraftfahrzeuge besonders wirtschaftlich betreiben zu können, ist man bestrebt, sie leichtgewichtig zu bauen. Dies hat auch Auswirkungen auf die Karosserie in der Art, dass diese aus möglichst dünnwandigem Blech hergestellt wird. Dabei kann dann das Problem auftreten, dass durch das Anziehdrehmoment des Spannelements zur Erzielung der vorgeschriebenen Befestigungskraft für das Bauelement, die Karosserie im Bereich der Buchse plastisch verformt wird und ansatzweise in die Buchse hineingezogen wird.

Durch diesen ungewollten Einzug kann in unerwünschter Weise bei oberflächenbeschichteten Trägerblechen, beispielsweise lackierten Karosserien, die Oberflächenbeschichtung auf der der Montageseite gegenüberliegenden Außenseite Risse bekommen, was später an dieser Stelle eine potentielle Roststelle darstellt.

### Vorteile der Erfindung

Das erfindungsgemäße Trägerblech mit Befestigungsvorrichtung mit den kennzeichenden Merkmalen des Anspruchs 1 hat demgegenüber den Vorteil, dass die zuvor erwähnten Unzulänglichkeiten vermieden werden.

Dazu weist die Befestigungsvorrichtung ein Halteteil mit einer Stufe und einen als Doppelbuchse ausgebildeten Distanzkörpern mit einer Außenhülse und einer Innenhülse auf. Die Lagezuordnung der Innenhülse zur Außenhülse ist dabei so abgestimmt, dass bei einem Verspannen der Befestigungsvorrichtung mit einem geforderten Anziehdrehmoment durch ein Spannelement der Einzug des Trägerblechs in den Distanzkörper begrenzt wird mit dem Anschlag der Innenhülse auf einer Stufe des Halteteils.

Dadurch bleibt die Verformung des Trägerblechs in einem tolerierten Bereich, in dem eine Oberflächenbeschichtung des Trägerblechs unversehrt bleibt. Somit ist die Gefahr der Korrodierung des Trägerblechs infolge der Montage der Befestigungsvorrichtung vermieden.

In den Unteransprüchen sind vorteilhafte Maßnahmen für die Realisierung der Erfindung angegeben.

### Zeichnung

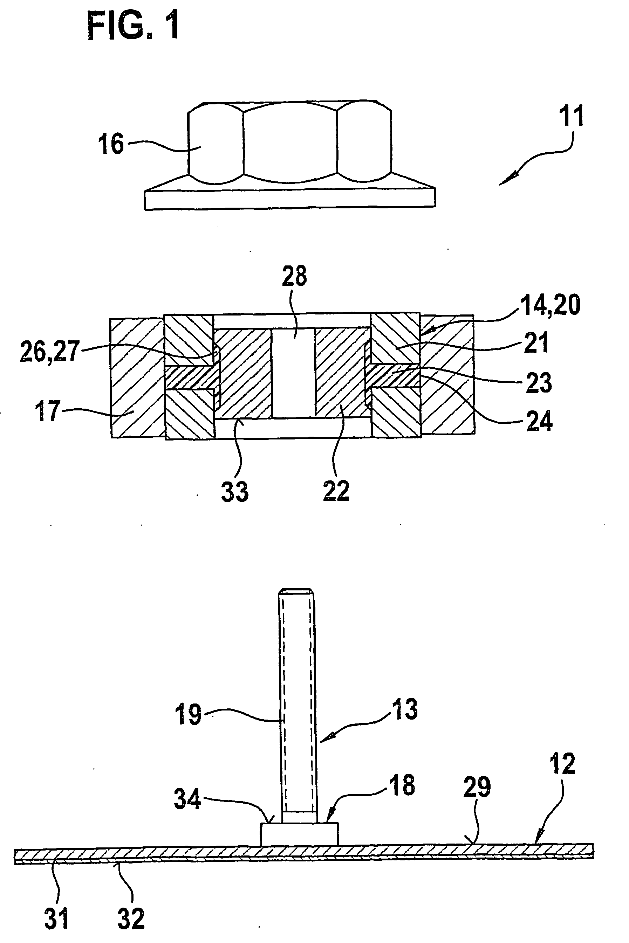

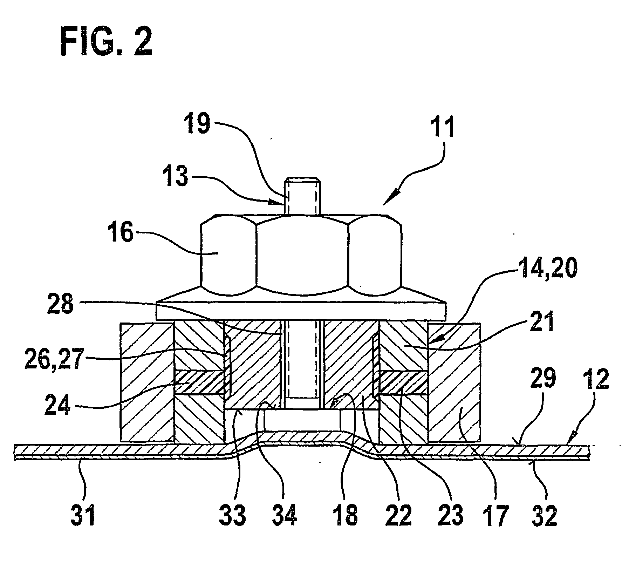

Ein Ausführungsbeispiel der Erfindung ist in der Zeichnung dargestellt und in der Figurenbeschreibung näher erläutert. Jeweils in einer bereichsweise geschnittenen Seitenansicht ist in der Figur 1 die Befestigungsvorrichtung mit voneinander getrennten Teilen und in der Figur 2 die Befestigungsvorrichtung in zusammengebauten Zustand dargestellt.

### Beschreibung des Ausführungsbeispiels

Eine in den Figuren 1, 2 dargestellte Befestigungsvorrichtung 11 ist an ein Trägerblech 12 als Teil einer Karosserie eines Kraftfahrzeugs angebracht.

Die Befestigungsvorrichtung 11 weist ein Halteteil 13, einen Distanzkörper 14 und ein Spannelement 16 auf; sie dient zur Befestigung eines Bauelements 17.

Das Halteteil 13 ist als ein sogenannter Stehbolzen ausgebildet, der an einem Ende lotrecht auf dem Trägerblech 12 aufgeschweißt ist. In diesem Bereich weist das Halteteil 13. unter Vergrösserung seiner übrigen Querschnittsfläche eine Stufe 18 auf. Im anderen Bereich trägt das Halteteil ein Gewinde 19.

Der Distanzkörper 14 ist als eine Doppelbuchse 20 ausgeführt, die aus einer Außenhülse 21 und aus einer Innenhülse 22 zusammengesetzt ist. Die relative Lage der Hülsen 21, 22 zueinander wird durch einen in den Distanzkörper 14 eingebrachten Füllstoff 23 festgelegt. Dazu weist die Außenhülse 21 vier, die Wandung der Außenhülse 21 durchdringende Zuführöffnungen 24 in Form von Stanzlöchern auf.

Durch diese Zufuhröffnungen 24 werden mittels eines Spritzwerkzeugs als Füllstoff 23 aushärtbarer Kunststoff in den Distanzkörper 14 eingebracht. Der Füllstoff 23 fließt dabei in einen Hohlraum 26, der Außenhülse 21 und in Aufnahmekammern 27 in Form von längsförmigen Schlitzen der Innenhülse 22. Nach der Verfestigung des Füllstoffes 23 ist ein Formschluß zwischen den Hülsen 21, 22 gebildet, welcher die Innenhülse 22 in der vorbestimmten Position zur Außenhülse 21 fixiert.

Das Spannelement 16 ist in Form einer Mutter ausgeführt, deren Innengewinde mit dem Gewinde 19 des Halteteils 13 korrespondiert. Die Mutter kann an ihrer Auflageseite noch ergänzt sein durch ein Unterlegmittel, wie beispielsweise eine Unterlegscheibe oder einer Zahnscheibe.

Das Bauelement 17 ist ein Sensorgehäuse mit Befestigungsflanschen. In den Figuren 1, 2 ist das Bauelement 17 nur durch einen Ausschnitt eines Befestigungsflansches repräsentiert, in dem der Distanzkörper 14 eingebettet ist. Die Innenhülse 22 des Distanzkörpers 14 weist eine Durchführung 28 auf, deren lichte Weite um ein Bewegungsspiel größer ist als die Querschnittsfläche des Halteteils 13 im Bereich seines Gewindes 19.

Beim Zusammensetzen der Befestigungsvorrichtung 11 wird das Bauelement 17 mittels des Distanzkörper 14 auf das Halteteil 13 aufgesteckt, so dass die Außenhülse 21, deren lichte Weite grösser ist als die Querschnittsfläche des Halteteils 13 im Bereich der Stufe 18 stirnseitig auf dem Trägerblech 12 aufliegt. Diese Seite des Trägerblechs 12 bildet eine Montageseite 29, während die andere Seite des Trägerblechs 12 eine mit einer Oberflächenbeschichtung 31 versehene Außenseite 32 bildet. Alternativ kann auch die Montageseite 29 eine Oberflächenbeschichtung 31 aufweisen.

In dieser Grundposition des vormontierten Distanzkörpers 14 auf dem Trägerblech 12 ist die Innenhülse 22 mit einer der Montageseite 29 zugewandten Stirnseite 33 um ein vorbestimmtes Maß von einer gegenüberliegenden Anschlagseite 34 der Stufe 18 des Halteteils 13 beabstandet.

Auf das aus dem Distanzkörper 14 herausragende freie Reststück des Halteteils 13 wird das Spannelement 16 bis zur Anlage an den Distanzkörper 14 aufgeschraubt.

Bei einem weitergeführten Schraubvorgang bis zum geforderten Anzugsdrehmoment wird die Befestigungsvorrichtung 12 verspannt, wobei die Stirnseite 33 der Innenhülse 22 auf Anschlag mit der Anschlagseite 34 der Stufe 18 kommt und das beginnende Hineinziehen des Trägerblechs 12 in den Distanzkörper 14 auf ein tolerierbares Maß innerhalb der elastischen Verformung des Trägerblechs 12 begrenzt, so dass die Oberflächenbeschichtung 31 in Form einer Lackschicht noch unverletzt bleibt.

Mit dieser über die Ausbildung des Distanzkörpers 14 und der Höhe der Stufe 18 des Halteteils 13 gezielt eingestellten geringen Verformung des Trägerblechs 12 ist das Bauelement 17 sicher gehalten und die Befestigungsvorrichtung 11 in der Funktionsstellung fixiert, ohne die Oberflächenbeschichtung 31 des Trägerblechs 12 zu gefährden.

## Patentansprüche

1. Trägerblech mit einer Befestigungsvorrichtung und mit wenigstens einem Bauelement (17), wobei die Befestigungsvorrichtung (11) ein auf einer Montageseite (29) des Trägerblechs (12) verankertes Halteteil (13) aufweist, das über eine Teillänge von einem Distanzkörper (14) des Bauelements (17) zumindest teilweise umgeben ist, der, zumindest mittelbar, auf der Montageseite (29) in Anlage ist und auf dem Halteteil (13) ein Spannelement (16) aufgebracht ist, das auf dem Distanzkörper (14) zumindest mittelbar kraftschlüssig aufliegt, wobei das Halteteil (13) wenigstens eine Stufe (18) aufweist und der Distanzkörper (14) aus einer Doppelbuchse (20) besteht, die aus einer Außenhülse (21) und einer Innenhülse (22) zusammengesetzt ist, wobei die relative Lage der Hülsen (21, 22) zueinander durch einen in die Doppelbuchse (20) eingebrachten Füllstoff (23) derart fixiert ist, dass bei einer vollständig zusammengefügten Befestigungsvorrichtung (11) mit dem Anziehen des Spannelements (16) die Verformung des Trägerblechs (12) durch die hier aufliegende Außenhülse (21) begrenzt wird mit dem Anschlag der Innenhülse (22) auf der Stufe (18) des Halteteils (13).

2. Trägerblech mit einer Befestigungsvorrichtung nach Anspruch 1, **dadurch gekennzeichnet, dass** das Halteteil (13) als Stehbolzen ausgebildet ist, der an einem Ende mit dem Trägerblech (12) stoffschlüssig verbunden ist und in diesem Bereich die Stufe (18) aufweist, die eine Vergrößerung der übrigen Querschnittsfläche des Halteteils (13) bildet.

3. Trägerblech mit einer Befestigungsvorrichtung nach Anspruch 2, **dadurch gekennzeichnet, dass** das Halteteil (13) in dem der Stufe (18) abgewandten Bereich ein Gewinde (19) aufweist, auf welches das Spannelement (16) in Form einer Mutter aufschraubbar ist.

4. Trägerblech mit einer Befestigungsvorrichtung nach Anspruch 3, **dadurch gekennzeichnet, dass** die Außenhülse (21) Zuführöffnungen (24) aufweist, durch die der Füllstoff (23) in einen Hohlraum (26) der Außenhülse (21) und in Aufnahmekammern (27) eingebracht wird.

5. Trägerblech mit einer Befestigungsvorrichtung nach Anspruch 4, **dadurch gekennzeichnet, dass** der Füllstoff (23) ein aushärtbarer Kunststoff ist, durch den ein Formschluß zwischen den Hülsen (21, 22) gebildet wird.

6. Trägerblech mit einer Befestigungsvorrichtung nach Anspruch 5, **dadurch gekennzeichnet, dass** die lichte Weite der Außenhülse (21) größer ist als die Querschnittsfläche des Halteteils (13) im Bereich der Stufe (18) und bei einem Aufstecken des Distanzkörpers (14) auf das Halteteil (13) die Außenhülse (21) die Stufe (18) passiert und zur Anlage an einer Montageseite (29) des Trägerblechs (12) kommt.

7. Trägerblech mit einer Befestigungsvorrichtung nach Anspruch 6, **dadurch gekennzeichnet, dass** nach dem Aufstecken des Distanzkörpers (14) auf das Halteteil (13) und bei der Anlage der Außenhülse (21) auf der Montageseite (29) die Innenhülse (22) stirnseitig von einer Anschlagseite (34) der Stufe (18) um ein Maß beabstandet ist, das einer tolerierbaren Verformung einer Oberflächenbeschichtung (31) des Trägerblechs (12) entspricht.

## Claims

1. Mounting plate with a fixing device and with at least one structural element (17), the fixing device (11) having a retaining part (13) which is secured on an installation side (29) of the mounting plate (12) and is at least partially surrounded over a partial length by a spacer body (14) of the structural element (17), which spacer body is at least indirectly in contact on the installation side (29), and a clamping element (16), which rests at least indirectly in a frictional manner on the spacer body (14), is placed on the retaining part (13), the retaining part (13) having at least one step (18) and the spacer body (14) comprising a double bushing (20), which is composed of an outer sleeve (21) and an inner sleeve (22), with the relative position of the sleeves (21, 22) with respect to each other being fixed in such a manner by a filler (23) placed into the double bushing (20) that, when a fixing device (11) is completely joined together, with the tightening of the clamping element (16) the deformation of the mounting plate (12) by the outer sleeve (21) resting on it here is limited by the inner sleeve (22) stopping on the step (18) of the retaining part (13).

2. Mounting plate with a fixing device according to Claim 1, **characterized in that** the retaining part (13) is designed as a stud bolt which is connected at one end to the mounting plate (12) with a cohesive material joint and in this region has the step (18) which forms an enlargement of the remaining cross-sectional area of the retaining part (13).

3. Mounting plate with a fixing device according to Claim 2, **characterized in that** the retaining part (13) has, in the region facing away from the step (18), a thread (19) onto which the clamping element (16) in the form of a nut can be screwed.

4. Mounting plate with a fixing device according to Claim 3, **characterized in that** the outer sleeve (21) has feed openings (24) through which the filler (23) is placed into a cavity (26) of the outer sleeve (21) and into receiving chambers (27).

5. Mounting plate with a fixing device according to Claim 4, **characterized in that** the filler (23) is a curable plastic by means of which a positive-locking connection is formed between the sleeves (21, 22).

6. Mounting plate with a fixing device according to Claim 5, **characterized in that** the clear width of the outer sleeve (21) is larger than the cross-sectional area of the retaining part (13) in the region of the step (18), and, when the spacer body (14) is placed onto the retaining part (13), the outer sleeve (21) passes the step (18) and comes to bear against an installation side (29) of the mounting plate (12).

7. Mounting plate with a fixing device according to Claim 6, **characterized in that**, after the spacer body (14) is placed onto the retaining part (13) and with the outer sleeve (21) bearing on the installation side (29), the inner sleeve (22) is spaced apart on the end side from a stop side (34) of the step (18) by an extent corresponding to a tolerable deformation of a surface coating (31) of the mounting plate (12).

## Revendications

1. Tôle de support munie d'un dispositif de fixation et d'au moins une pièce (17), le dispositif de fixation (11) présentant un élément de retenue (13) ancré sur un côté de montage (29) de la tôle de support (12), et entouré au moins partiellement, sur une longueur partielle, d'un corps d'entretoise (14) de la pièce (17), lequel corps est appuyé au moins indirectement sur le côté de montage (29), avec un élément de serrage (16) monté sur l'élément de retenue (13) et qui porte, au moins indirectement par action de force sur le corps d'entretoise (14), l'élément de retenue (13) présentant au moins un épaulement (18) alors que le corps d'entretoise (14) est composé d'une douille double (20) composée d'un manchon extérieur (21) et d'un manchon intérieur (22), la position relative des manchons (21, 22) l'un par rapport à l'autre étant immobilisée par un matériau de remplissage (23) introduit dans la douille double (20) de telle manière que, dans un dispositif de fixation (11) entièrement assemblé, avec serrage de l'élément de serrage (16), la déformation de la tôle de support (12) est limitée par le manchon extérieur (21) qui y est appuyé, le manchon intérieur (22) butant sur l'épaulement (18) de l'élément de retenue (13).

2. Tôle de support munie d'un dispositif de fixation selon la revendication 1,
**caractérisée en ce que**
l'élément de retenue (13) est constitué par un goujon assemblé à la tôle de support (12) à une extrémité par une liaison par continuité de matière et qui dans cette région présente l'épaulement (18) formant un agrandissement de la surface de section restante de l'élément de retenue (13).

3. Tôle de support munie d'un dispositif de fixation selon la revendication 2,
**caractérisée en ce que**
dans la région éloignée de l'épaulement (18), l'élément de retenue (13) présente un filetage (19) sur lequel l'élément de serrage (16) peut être serré à la façon d'un écrou.

4. Tôle de support munie d'un dispositif de fixation selon la revendication 3,
**caractérisée en ce que**
le manchon extérieur (21) présente des ouvertures d'amenée (24) à travers lesquelles on introduit le matériau de remplissage (23) dans une cavité (26) du manchon extérieur (21) et dans des chambres de réception (27).

5. Tôle de support munie d'un dispositif de fixation selon la revendication 4,
**caractérisée en ce que**
le matériau de remplissage (23) est une matière plastique durcissable qui établit une liaison par sûreté de forme entre les manchons (21, 22).

6. Tôle de support munie d'un dispositif de fixation selon la revendication 5,
**caractérisée en ce que**
la largeur libre du manchon extérieur (21) est plus grande que la surface de section de l'élément de retenue (13) dans la région de l'épaulement (18) et, lorsqu'on emboîte le corps d'entretoise (14) sur l'élément de retenue (13), le manchon extérieur (21) franchit l'épaulement (18) et vient s'appuyer sur un côté de montage (29) de la tôle de support (12).

7. Tôle de support munie d'un dispositif de fixation selon la revendication 6,
**caractérisée en ce qu'**
après avoir emboîté le corps entretoise (14) sur l'élément de retenue (13) et lorsque le manchon extérieur (21) est appuyé sur la face de montage (29), le manchon intérieur (22) est espacé, côté frontal, d'un côté de butée (34) de l'épaulement (18), d'une distance qui correspond à une déformation admissible du revêtement superficiel (31) de la tôle de support (2).
